# FASCICULE DE BREVET EUROPEEN

(11) **EP 0 667 940 B1**
(45) Date de publication et mention de la délivrance du brevet: **29.01.1997**
(21) Numéro de dépôt: 93924666.6
(22) Date de dépôt: 02.11.1993
(51) Int. Cl.: F16K 5/06, F16K 47/02

(54) **VANNE DE REGULATION A BILLE OU A BOISSEAU**
KUGEL-ODER KÜKENREGELVENTIL
FLOW REGULATING VALVE OF THE BALL OR PLUG TYPE

(30) Priorité: 06.11.1992 FR 9213577
(43) Date de publication de la demande: 23.08.1995
(73) Titulaire: NELES-JAMESBURY INC., Worcester, Massachusetts 01615-004 (US)
(72) Inventeur: NELES-JAMESBURY INC., Worcester, Massachusetts 01615-004 (US)
(74) Mandataire: Nithardt, Roland
(86) Numéro de dépôt international: FR9301080
(87) Numéro de publication internationale: WO9411659

(56) Documents cités:
- WO-A-85/05041
- WO-A-88/05880
- DE-A- 2 457 226
- DE-U- 1 759 659
- DE-U- 1 836 861
- FR-A- 1 517 003
- GB-A- 2 087 517
- US-A- 3 908 698
- US-A- 4 846 213

## Description

La présente invention concerne une vanne de régulation comportant un corps relié à un conduit d'entrée et à un conduit de sortie alignés selon un axe appelé axe de la vanne, ce corps étant pourvu d'un évidement dans lequel est logée une bille ou un boisseau rotatif autour d'un axe situé dans un plan perpendiculaire à l'axe de la vanne, la bille ou le boisseau comportant au moins une zone de fermeture de ladite vanne s'étendant sur une partie de sa circonférence et définissant une position fermée lorsque la zone de fermeture est en face du conduit d'entrée, et une zone de régulation du fluide circulant dans la vanne s'étendant sur le reste de sa circonférence et définissant une position de régulation lorsqu'une partie de la zone de fermeture et une partie de la zone de régulation sont en face du conduit d'entrée, la bille définissant en outre une position ouverte lorsque la zone de régulation est en face du conduit d'entrée.

Les vannes de régulation connues sont généralement constituées d'un corps muni d'une plaque d'obturation comprenant un orifice, et d'un obturateur à pointeau agencé pour obturer plus ou moins cet orifice. L'orifice a généralement une forme circulaire et le pointeau une forme conique. En introduisant plus ou moins le pointeau conique dans l'orifice circulaire, on assure la régulation du fluide traversant la vanne. Ce type de vanne présente un inconvénient majeur à savoir, la course de régulation est très courte, ce qui, dans certains cas, est insuffisant pour garantir une régulation fine. Un autre inconvénient de ce genre de vannes vient du fait qu'on n'enregistre pratiquement pas de perte de charge en début d'ouverture. En effet, lors de cette ouverture, l'énergie potentielle se transforme brusquement en énergie cinétique, libérant ainsi un fluide se déplaçant à grande vitesse, ce qui est source d'érosion et de turbulences. Ce phénomène engendre également des vibrations dans la vanne et en augmente le niveau sonore et la fatigue mécanique. L'érosion n'agissant pas uniformément sur la plaque d'obturation et sur le pointeau, la vanne n'assure plus une étanchéité parfaite après un temps d'utilisation relativement court.

Un autre type de vanne connue utilisée pour assurer une régulation, comporte un corps pourvu d'un évidement dans lequel se déplace un piston. Le corps de la vanne est pourvu d'une série de disques parallèles espacées et disposées dans un plan perpendiculaire à l'axe de déplacement du piston. Lorsque la vanne est fermée, le piston bouche entièrement l'orifice de cette vanne. A l'ouverture, le piston libère d'abord un espace compris entre deux premiers disques parallèles. Lorsque l'on déplace davantage le piston, on libère un deuxième espace compris entre les deux disques suivantes, puis un troisième espace et ainsi de suite. La régulation se fait donc par étapes, d'une manière discontinue, ce qui dans certaines applications, n'est pas satisfaisant. De plus, comme l'ouverture de la vanne n'engendre que peu de pertes de charges, les problèmes mentionnés précédemment, notamment ceux dus à l'érosion, aux vibrations, à la fatigue mécanique et au bruit, ne sont pas résolus.

Une autre vanne de régulation connue comporte une bille pourvue d'un insert sphérique. Cet insert est composé d'une calotte sphérique et d'une série de plaques planes disposées de manière sensiblement parallèle entre elles et la partie plane de la calotte sphérique. Cette calotte sphérique comporte une partie pleine dimensionnée de façon que lorsqu'elle est située en face du conduit d'entrée de la vanne, elle l'obture entièrement et empêche ainsi le fluide de traverser ladite vanne. Cette calotte sphérique comporte en outre des ouvertures périphériques conçues pour laisser passer le fluide à travers la vanne en début d'ouverture. Les plaques planes comportent des orifices disposés perpendiculairement à leur surface et conçus pour laisser passer le fluide à travers la vanne en début d'ouverture et sont séparées par un espace permettant le passage du fluide en fin d'ouverture. La perte de charge à l'ouverture est importante et la régulation se fait sur une course relativement grande. Cependant, l'inconvénient de ce type de vanne est que sa réalisation pratique nécessite un usinage important et un montage difficile des pièces ce qui a pour conséquence un coût de fabrication élevé.

Une autre vanne de régulation connue est décrite dans la publication allemande DE-A-24 57 226 qui est pris à base du préambule de la revendication indépendante 1. Un mode de réalisation particulier de cette vanne représente une vanne à bille pourvue d'une entaille centrale ou périphérique destinée à améliorer la fonction de régulation de la vanne. Cette vanne présente l'inconvénient que, si l'on désire une perte de charge importante en début d'ouverture, il faut que l'entaile soit petite, ce qui limite le débit.

La publication française FR-A-1 517 003 décrit une vanne destinée à calibrer le passage de gaz selon la nature de ce gaz. Elle comporte un corps tronconique reliant perpendiculairement les conduits d'amenée et de sortie de gaz, ce corps étant pourvu d'alésages ou de fentes de passage disposés parallèlement et de dimensions différentes. A chaque type de gaz correspond un type de bouchon coopérant avec l'intérieur dudit corps et agencé pour obturer une partie des alésages ou fentes. Cette vanne a été conçue pour résoudre un problème de calibrage lié au gaz. En aucun cas, elle ne permet de réguler un débit de liquide.

La présente invention se propose de pallier ces inconvénients en fournissant une vanne de régulation présentant une course de régulation importante et assurant une forte perte de charge à l'ouverture tout en étant d'une réalisation facile et économique.

Ce but est atteint par une vanne telle que définie en préambule, caractérisée en ce que la bille ou le boisseau comporte plusieurs canaux périphériques et superposés traversant ladite bille ou ledit boisseau de part en part, lesdits canaux ayant chacun une section inférieure à la section du conduit d'entrée, et étant parallèles entre-eux et ayant un plan médian perpendiculaire à l'axe de rotation de la bille ou du boisseau, le bord intérieur desdits canaux étant sensiblement parallèle à l'axe de la vanne lorsque la bille ou le boisseau est en position ouverte, lesdits canaux étant alors disposés parallèlement à l'axe d'écoulement du fluide.

On appelle "plan médian", le plan qui définit la direction générale des canaux, il est parallèle à l'axe qui définit les conduits d'entrée et de sortie, et perpendiculaire à l'axe de la bille ou du boisseau. Il correspond également au plan de symétrie desdits canaux.

Ces canaux peuvent présenter des profils ondulés autour d'un plan sensiblement perpendiculaire à l'axe de rotation. Ils peuvent aussi comporter une partie plane et une partie présentant des profils ondulés.

Selon une autre forme de réalisation, lesdits canaux peuvent présenter une section à profil divergent.

Selon une variante, les canaux comportent une zone de détente présentant une épaisseur plus grande que celle du reste du canal. Cette zone de détente peut comporter une rainure transversale de section sensiblement rectangulaire, de section sensiblement triangulaire, ou être formée de plusieurs rainures transversales.

Selon une autre forme de réalisation, les canaux peuvent comporter au moins une chicane transversale.

La bille ou le boisseau peut en outre comporter une entaille latérale agencée de manière qu'une partie de ladite entaille latérale soit en contact avec le conduit d'entrée, et qu'une autre partie de l'entaille latérale soit en contact avec le conduit de sortie lorsque la bille est en position ouverte.

La présente invention et ses avantages ressortiront mieux de la description d'exemples de réalisation en référence au dessin annexé dans lequel:
- la figure 1 est une vue en coupe verticale d'une forme de réalisation d'une vanne selon la présente invention en position fermée,
- la figure 2 est une vue en coupe verticale de la vanne de la figure 1 en position ouverte,
- la figure 3 est une vue en coupe selon la ligne A-A de la vanne de la figure 1 en position de régulation,
- les figures 4a à 4g sont des vues schématiques en perspective de formes de canaux tels qu'ils peuvent être réalisés dans une bille ou un boisseau selon la présente invention,
- les figures 5a à 5f sont des vues en perspective d'exemples de réalisation de billes pour une vanne selon la présente invention,
- la figure 6 est une vue en perspective d'un exemple de réalisation d'un boisseau pour une vanne selon la présente invention, et
- la figure 7 est une vue en coupe verticale d'une variante de réalisation d'une vanne selon la présente invention, en position fermée.

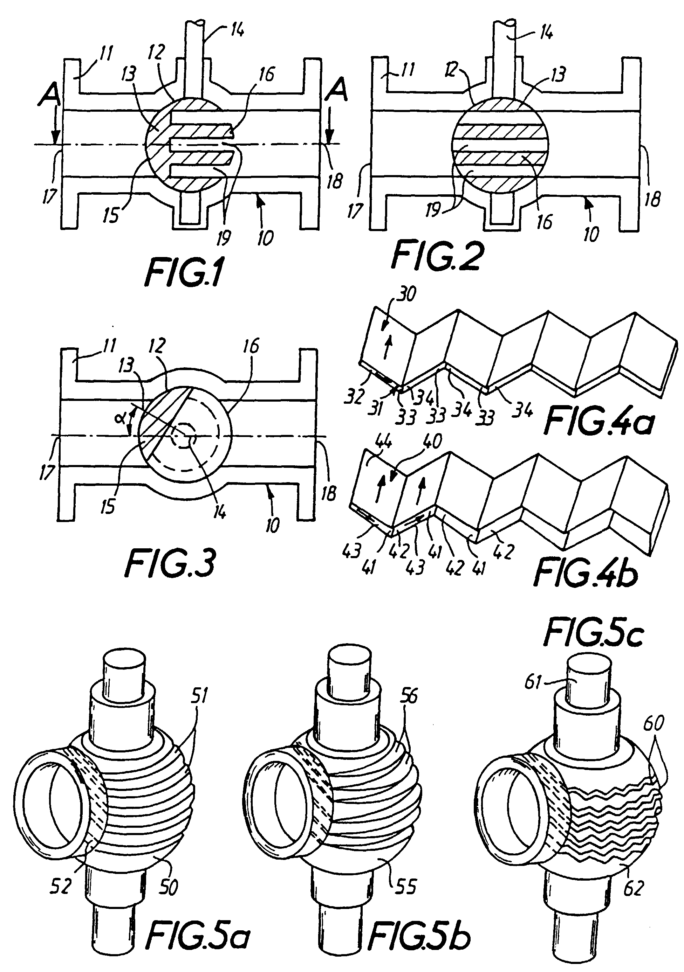

En référence aux figures 1 à 3, la vanne 10 comporte un corps 11 pourvu d'un évidement 12 dans lequel est logée une bille 13. Cette bille est rotative autour d'un axe 14 et comporte sur une première partie de sa périphérie une zone de fermeture 15, et sur une seconde partie de sa périphérie une zone de régulation 16. La zone de fermeture 15 est agencée de manière à empêcher le passage d'un fluide amené par un conduit d'entrée 17 relié au corps 11 de la vanne, vers un conduit de sortie 18 également relié au corps 11 de la vanne. Lesdits conduits d'entrée et de sortie sont alignés selon un axe appelé axe de la vanne. La zone de régulation 16 est conçue pour permettre le passage d'un fluide depuis le conduit d'entrée 17 jusqu'au conduit de sortie 18. Cette zone de régulation comporte des canaux 19 en forme de passages plans disposés selon des plans parallèles sensiblement perpendiculaires à l'axe de rotation 14 et traversant la bille de part en part.

La bille tourne autour de son axe de rotation d'un angle β appelé angle d'ouverture, β étant défini comme l'angle formé entre l'axe de la vanne et la droite passant par le centre de la bille et le centre de la zone de fermeture. Cet angle d'ouverture est nul lorsque la bille est en position fermée. Il est égal à 90° ou plus lorsque ladite bille est en position ouverte, et varie entre 0° et 90° ou plus lorsque la bille est en zone de régulation.

Selon ce mode de réalisation, lorsque l'angle d'ouverture est nul, la zone de fermeture 15 se trouve dans le prolongement du conduit d'entrée 17 et le fluide ne peut pas traverser la vanne. Lorsque l'on fait tourner la bille 13 autour de l'axe de rotation 14, une partie des canaux 19 entre progressivement dans le prolongement du conduit d'entrée 17. Pour un angle d'ouverture β faible, seule une faible surface de ces canaux se trouve en contact avec le conduit d'entrée. La quantité de fluide qui peut passer à travers les canaux et donc traverser la vanne est faible.

Pour des angles d'ouverture β plus importants, la surface des canaux 19 se trouvant en contact avec le conduit d'entrée 17 est plus grande. Une plus grande quantité de fluide peut donc passer à travers la vanne. La commande de l'angle d'ouverture β permet donc une régulation précise de la quantité de fluide traversant la vanne.

Pour de petits angles d'ouverture β, la petite dimension des canaux crée des frottements importants ce qui occasionne des pertes de charge importantes et évite ainsi les problèmes occasionnés par une ouverture trop brusque de la vanne.

La figure 4a représente une première variante de réalisation des canaux de la bille. Un de ces canaux 30 comporte des ondulations dont le profil présente une succession de zones angulaires 31 et de zones planes 32. Chaque zone angulaire peut être séparée en une zone pré-angulaire 33 et une zone post-angulaire 34.

Dans ce type de canal, la circulation du fluide se fait comme suit. En début d'ouverture de la vanne, le fluide se déplace en suivant le profil des canaux. Il rencontre d'abord une zone plane 32, puis une zone pré-angulaire 33 dans laquelle il subit une légère détente. Il continue ensuite dans une zone post-angulaire 34 où il subit une légère compression et ainsi de suite. Ces cycles de compression et de détente occasionnent une perte de charge importante en début d'ouverture.

En fin d'ouverture, le fluide se déplace transversalement à travers l'ensemble des zones planes 32. Chaque portion de fluide se déplace dans un plan et forme un ensemble de nappes de fluide. Il n'y a plus de cycles de compression et de détente, donc pratiquement plus de perte de charge en fin d'ouverture. Les nappes peuvent être constituées de portions sensiblement planes lorsque le profil des canaux correspond à une ligne brisée. Ces nappes peuvent avoir une surface gauche par exemple lorsque les canaux ont un profil ondulé, sinusoïdal ou similaire.

La figure 4b représente une deuxième variante de réalisation des canaux de la bille. Cette disposition est particulièrement avantageuse dans le cas où le fluide circulant à travers la vanne est un fluide compressible. Un des canaux 40 comporte une zone pré-angulaire 41, une zone post-angulaire 42, une zone plane longitudinale 43 et une zone plane transversale 44 ce qui lui donne une forme ondulée.

Dans ce mode de réalisation, la perte de charge est importante en début d'ouverture et pratiquement inexistante en fin d'ouverture.

En effet, étant donné que le profil du canal 40 présente une section divergente, lorsque la bille est en position de régulation, la pression s'exerçant sur le fluide dans la partie de la vanne reliée au conduit d'entrée, est supérieure à la pression du fluide dans la partie de la vanne reliée au conduit de sortie. Le fluide subit ainsi une détente qui est accompagnée d'une augmentation de volume possibles puisque les canaux présentent un profil à section divergente.

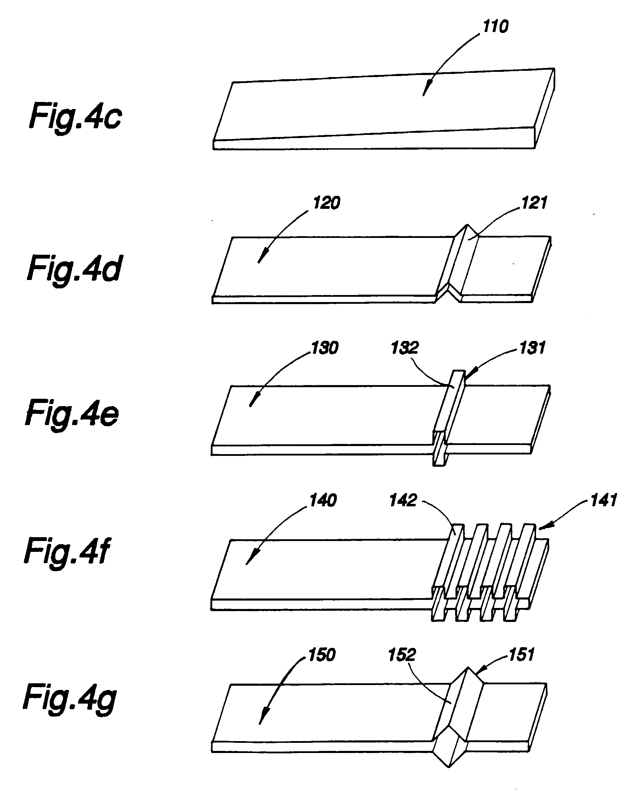

La figure 4c illustre une troisième variante de réalisation des canaux de la bille. Comme dans le cas de la variante illustrée par la figure 4b, cette réalisation est particulièrement avantageuse lorsqu'un fluide compressible circule dans la vanne. En effet, le fait que la section transversale du canal 110 est définie par deux lignes divergentes, le fluide peut subir une détente.

La figure 4d illustre une quatrième variante de réalisation des canaux de la bille. Dans cette variante, le canal 120 comporte une chicane transversale 121 agencée de telle manière qu'elle empêche le jet direct du fluide à travers la vanne en début d'ouverture. En fin d'ouverture, le passage du fluide se fait selon des nappes fluides, d'une manière similaire à ce qui a été expliqué en référence à la figure 4a.

Dans la variante illustrée par la figure 4e, on a introduit sur le canal 130, une zone de détente 131. Elle se présente sous la forme d'une rainure transversale 132 de section sensiblement rectangulaire. En début d'ouverture, lorsque le fluide passe du canal 130 dans la zone de détente 131, il subit une détente. Lorsqu'il passe ensuite de la zone de détente dans le canal qui prolonge cette zone, il subit une compression. Ces détentes et compressions produisent une perte de charge en début d'ouverture.

La réalisation illustrée par la figure 4f est similaire à celle illustrée par la figure 4e. La différence tient dans le fait que la zone de détente 141 du canal 140 dans la figure 4f comporte plusieurs rainures transversales 142, ce qui augmente le nombre de détentes et de compressions. La perte de charge en début d'ouverture est ainsi plus importante.

Dans le mode de réalisation illustré par la figure 4g, la zone de détente 151 du canal 150 comporte une rainure transversale 152 sensiblement triangulaire. Cette réalisation permet à nouveau, de réaliser une perte de charge en début d'ouverture en créant une détente et une compression dans le fluide.

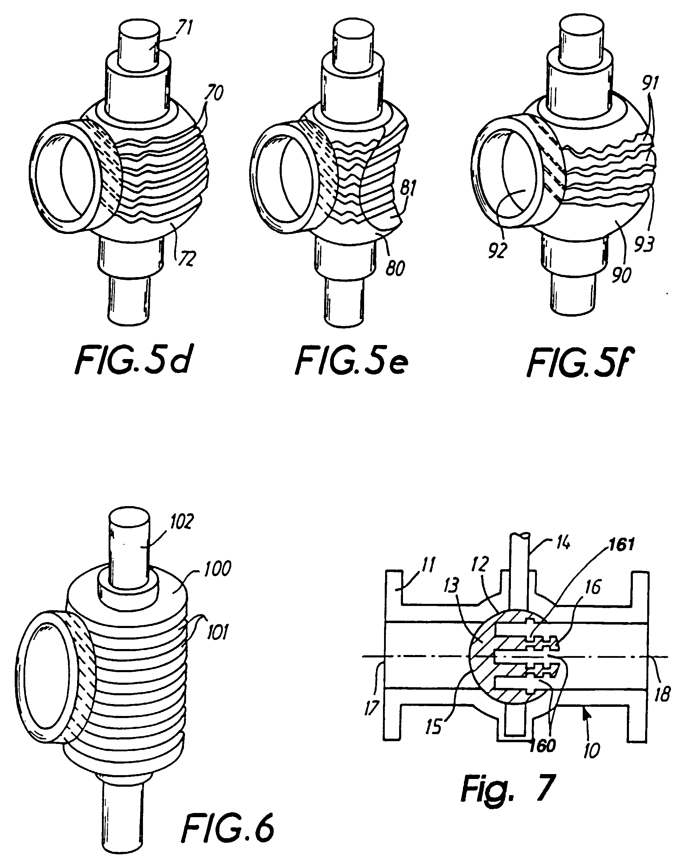

Les figures 5a à 5f représentent plusieurs formes possibles de réalisation de la bille équipant la vanne.

En référence à la figure 5a, la bille 50 comporte des canaux 51 réalisés sous la forme d'ouvertures planes parallèles entre elles et s'étendant depuis la périphérie de la bille 50 vers l'intérieur. Ces ouvertures sont disposées de telle manière que, lorsque la vanne est en positon ouverte, les bords intérieurs 52 des canaux sont sensiblement parallèles à l'axe de la vanne.

Dans ce mode de réalisation, seule une faible surface des canaux 51 est en contact avec le conduit d'entrée au début de l'ouverture. Lorsque la vanne est entièrement ouverte, toute la surface disponible des canaux est en contact avec le conduit d'entrée. En début d'ouverture, la faible surface de contact entre les canaux 51 et le conduit d'entrée crée des remous et par conséquent, des pertes de charge importantes, alors qu'en fin d'ouverture, le fluide traverse facilement la bille sans subir de grande perte de charge.

En référence à la figure 5b, la bille 55 comporte des canaux 56 plans présentant une section à profil divergent. Cette forme de canaux à section à profil divergent est utilisée comme mentionné en référence à la figure 4c, pour des fluides compressibles dans le but de permettre une détente du fluide.

La figure 5c illustre une bille comportant des canaux 60 tels que celui représenté par la figure 4a. Le profil de ces canaux est ondulé autour d'un plan sensiblement perpendiculaire à l'axe de rotation 61 de la bille 62. Ces canaux 60 peuvent avoir un profil de ligne brisée, un profil sinusoïdal ou tout autre profil ondulé.

Dans ce mode de réalisation, le profil ondulé des canaux 60 a pour but d'augmenter encore la perte de charge. Lorsque la bille est en début d'ouverture, la fluide se déplace longitudinalement dans les canaux. Chaque fois qu'une portion de fluide arrive à proximité d' une ondulation, elle subit une compression. Dès que cette portion a dépassé ladite ondulation, elle subit une détente. Cette série de cycles de compressions et de détentes provoque une importante perte de charge.

Lorsque la bille est en position ouverte, le fluide se déplace transversalement dans les canaux. Chaque portion de fluide se déplace dans un plan. Il n'y a donc plus de cycles de compressions et de détentes, donc plus de perte de charge.

En référence à la figure 5d, les canaux 70 présentent des ondulations autour de plans sensiblement perpendiculaires à l'axe de rotation 71 de la bille 72 dans une première zone s'étendant vers l'intérieur de la bille, et sont prolongés par des canaux sensiblement plans dans une deuxième zone s'étendant vers la périphérie de la bille. Cette réalisation peut être considérée comme étant une combinaison des réalisations selon les figures 5a et 5c.

Dans ce mode de réalisation, la forme ondulée des canaux 70 assure une perte de charge importante en début d'ouverture, alors que la partie plane des canaux génère un flux sensiblement laminaire à la sortie de la vanne. En fin d'ouverture, le fluide circule selon des nappes de fluide planes quelle que soit la forme des canaux 70.

En référence à la figure 5e, la bille 80 comporte une entaille latérale 81, dont la dimension et la position sont adaptées pour permettre à un fluide de passer directement du conduit d'entrée au conduit de sortie lorsque la bille est en position ouverte.

Selon ce mode de réalisation, lorsque la bille 80 est en début d'ouverture, seuls les canaux permettent la liaison entre le conduit d'entrée et le conduit de sortie. Ils assurent une perte de charge importante en début d'ouverture. Lorsque l'angle d'ouverture β devient plus important, l'entaille latérale 81 assure également la liaison entre le conduit d'entrée et le conduit de sortie, ce qui permet de diminuer la perte de charge et d'augmenter le débit.

La bille 90 illustrée par la figure 5f, comporte des canaux 91 de forme ondulée tels que celui décrit en référence à la figure 4a et est utilisée dans le cas d'un fluide compressible.

La vanne selon l'invention peut également être équipée d'un boisseau 100 tel que représenté par la figure 6. Ce boisseau 100 comporte des canaux 101 périphériques, situés dans des plans parallèles sensiblement perpendiculaires à son axe de rotation 102.

Dans cette forme de réalisation, les canaux 101 sont disposés de manière que seule une faible surface utile des canaux soit en contact avec le conduit d'entrée en début d'ouverture, alors qu'une grande surface desdits canaux assure la liaison entre le conduit d'entrée et le conduit de sortie dans le cas d'une plus grande ouverture. La rotation du boisseau 100 autour de l'axe de rotation 102 assure donc une régulation de la quantité de fluide traversant la vanne.

La figure 7 représente une réalisation similaire à celle de la figure 1, dans laquelle, les canaux 19 rectilignes de la figure 1 ont été remplacés par des canaux comportant une zone de détente 161 du type de celle représentée par la figure 4f.

Ces différents modes de réalisation ont des fonctionnements similaires et permettent tous d'atteindre les buts fixés par l'invention.

La présente invention n'est pas limitée aux exemples décrits ci-dessus mais s'étend à toutes modifications ou variantes évidentes pour l'homme de l'art. Les différentes formes de canaux et de zones de détentes peuvent notamment être réalisées indifféremment dans des billes ou dans des boisseaux.

## Revendications

1. Vanne de régulation (10) comportant un corps (11) relié à un conduit d'entrée (17) et à un conduit de sortie (18) alignés selon un axe appelé axe de la vanne, ce corps étant pourvu d'un évidement (12) dans lequel est logée une bille (13) ou un boisseau rotatif autour d'un axe situé dans un plan perpendiculaire à l'axe de la vanne, la bille (13) ou le boisseau comportant au moins une zone de fermeture (15) de ladite vanne (10) s'étendant sur une partie de sa circonférence et définissant une position fermée lorsque la zone de fermeture (15) est en face du conduit d'entrée (17), et une zone de régulation (16) du fluide circulant dans la vanne (10) s'étendant sur le reste de sa circonférence et définissant une position de régulation lorsqu'une partie de la zone de fermeture (15) et une partie de la zone de régulation (16) sont en face du conduit d'entrée (17), la bille (13) définissant en outre une position ouverte lorsque la zone de régulation (16) est en face du conduit d'entrée (17), caractérisée en ce que la bille (13, 50, 55, 62, 72, 80, 90) ou le boisseau (100) comporte plusieurs canaux (19, 30, 40, 51, 56, 60, 70, 91, 101) périphériques et superposés traversant ladite bille ou ledit boisseau de part en part, lesdits canaux ayant chacun une section inférieure à la section du conduit d'entrée (17), et étant parallèles entre-eux et ayant un plan médian perpendiculaire à l'axe de rotation (14, 61, 71, 102) de la bille ou du boisseau, le bord intérieur desdits canaux étant sensiblement parallèle à l'axe de la vanne lorsque la bille ou le boisseau est en position ouverte, lesdits canaux étant alors disposés parallèlement à l'axe d'écoulement du fluide.

2. Vanne selon la revendication 1, caractérisée en ce que les canaux (30, 40, 60, 91) présentent des profils ondulés autour d'un plan sensiblement perpendiculaire à l'axe de rotation (61).

3. Vanne selon la revendication 1, caractérisée en ce qu'une partie des canaux (70) est plane et une autre partie des canaux présente des profils ondulés.

4. Vanne selon la revendication 1, caractérisée en ce que les canaux (40, 56, 91) présentent une section à profil divergent.

5. Vanne selon la revendication 1, caractérisée en ce que les canaux (130, 140, 150, 160) comportent une zone de détente (131, 141, 151, 161) présentant une épaisseur plus grande que celle du reste du canal.

6. Vanne selon la revendication 5, caractérisée en ce que la zone de détente (131, 141, 161) comporte au moins une rainure (132, 142) transversale de section sensiblement rectangulaire.

7. Vanne selon la revendication 6, caractérisée en ce que la zone de détente (141, 161) comporte plusieurs rainures transversales (142).

8. Vanne selon la revendication 5, caractérisée en ce que la zone de détente (151) comporte une rainure transversale (152) de section sensiblement triangulaire.

9. Vanne selon la revendication 1, caractérisée en ce que les canaux (120) comportent au moins une chicane transversale (121).

10. Vanne selon la revendication 1, caractérisée en ce que la bille (80) ou le boisseau comporte en outre, un entaille latérale (81) agencé de manière qu'une partie de celle-ci soit en contact avec le conduit d'entrée, et qu'une autre partie de l'entaille latérale (81) soit en contact avec le conduit de sortie lorsque la vanne est en position ouverte.

## Patentansprüche

1. Regelventil (10) bestehend aus einem mit einem Eingangskanal (17) und mit einem Ausgangskanal (18) verbundenen Körper (11), wobei die besagten Kanäle entlang einer Ventilachse genannten Achse ausgerichtet sind, wobei der besagte Körper mit einer Aushölung (12) versehen ist, in welcher eine sich um eine der Ventilachse rechtwinklig angebrachten Achse drehende Kugel (13) oder Zylinder angebracht ist, wobei die Kugel (13) oder der Zylinder mindestens ein Schließbereich (15) für das besagte Ventil (10) besitzt, der sich auf einem Teil des Umfangs ausstreckt und der die geschlossene Position festlegt wenn der Schließbereich (15) vor dem Eingangskanal (17) liegt, und ein Bereich (16) zur Regelung der in dem Ventil (10) laufenden Flüssigkeit, Bereich der sich auf dem Rest des Umfangs ausstreckt, und der eine Regulierungsposition bestimmt wenn ein Teil des Schließbereichs (15) und ein Teil des Regelbereichs (16) vor dem Eingangskanal (17) liegen, wobei die Kugel (13) dazu eine Offen-Position bestimmt wenn der Regelbereich (16) vor dem Eingangskanal (17) liegt, gekennzeichnet dadurch, daß die Kugel (13, 50, 55, 62, 72, 80, 90) oder der Zylinder (100) mehrere peripherische, übereinanderliegende Kanäle besitzt (19, 30, 40, 51, 56, 60, 70, 91, 101), die durch die besagte Kugel oder durch den besagten Zylinder gehen, wobei die Durchgangs-Sektion jedes der besagten Kanäle kleiner ist als die Durchgangs-Sektion des Eingangskanals (17), wobei die besagten Kanäle unter sich parallel verlaufen und deren Mittelebene senkrecht zur Drehachse (14, 61, 71, 102) der Kugel oder des Zylinders liegt, wobei der innere Rand der besagten Kanäle merklich parallel zur Ventilachse verläuft wenn die Kugel oder der Zylinder in der Offen-Position stehen, wobei die besagten Kanäle dann parallel zur Abflußrichtung der Flüßigkeit angebracht sind.

2. Ventil gemäß Anspruch 1, gekennzeichnet dadurch, daß die Kanäle (30, 40, 60, 91) Wellenprofile aufweisen die um eine der Drehachse (61) merklich rechtwinkligen Ebene verlaufen.

3. Ventil gemäß Anspruch 1, gekennzeichnet dadurch, daß ein Teil der Kanäle (70) flach verläuft, und daß ein anderer Teil der Kanäle Wellenprofile aufweist.

4. Ventil gemäß Anspruch 1, gekennzeichnet dadurch, daß die Kanäle (40, 56, 91) einen Schnitt mit einem auseinanderlaufenden Profil aufweisen.

5. Ventil gemäß Anspruch 1, gekennzeichnet dadurch, daß die Kanäle (130, 140, 150, 160) einen Druckminderungsbereich (131, 141, 151, 161) enthalten, der eine größere Dicke aufweist als der Rest des Kanals.

6. Ventil gemäß Anspruch 5, gekennzeichnet dadurch, daß der Druckminderungsbereich (131, 141, 161) mindestens eine Querrille (132, 142) mit einem merklich rechteckigen Schnitt besitzt.

7. Ventil gemäß Anspruch 6, gekennzeichnet dadurch, daß der Druckminderungsbereich (141, 161) mehrere Querrillen (142) besitzt.

8. Ventil gemäß Anspruch 5, gekennzeichnet dadurch, daß der Druckminderungsbereich (151) mindestens eine Querrille (152) mit einem merklich dreieckigen Schnitt besitzt.

9. Ventil gemäß Anspruch 1, gekennzeichnet dadurch, daß die Kanäle (120) mindestens eine Quer-Schikane (121) besitzen.

10. Ventil gemäß Anspruch 1, gekennzeichnet dadurch, daß die Kugel (80) oder der Zylinder dazu noch eine seitliche Kerbe (81) aufweist, die so angebracht ist, daß ein Teil dieser mit dem Eingangskanal in Berührung ist, und daß ein anderer Teil der seitlichen Kerbe (81) mit dem Ausgangskanal in Berührung ist wenn das Ventil in der Offen-Position ist.

## Claims

1. Flow regulating valve (10) comprising a body (11) connected to an inlet pipe (17) and to an outlet pipe (18) aligned with an axis called the valve axis, this body being provided with a recess (12) in which is housed a ball (13) or a plug which rotates around an axis situated in a plane perpendicular to the valve's axis, the ball (13) or plug comprising at least one shut-off area (15) of said valve (10) extending over part of its circumference and defining a closed position when the shut-off area (15) is opposite the inlet pipe (17), and a regulating area (16) for the fluid circulating in the valve extending over the rest of its circumference and defining a regulating position when part of the shut-off area (15) and part of the regulating area (16) are opposite the inlet pipe (17), the ball (13) furthemore defining an open position when the regulating area (16) is opposite the inlet pipe (17), characterized in that the ball (13, 50, 55, 62, 72, 80, 90) or the plug (100) comprise several peripheral, superposed channels (19, 30, 40, 51, 56, 60, 70, 91, 101) crossing right through said ball or said plug, said channels each having a smaller cross section than the cross section of the inlet pipe (17), and being parallel to one another and having a center plane perpendicular to the ball's or plug's axis of rotation (14, 61, 71, 102), the inner edge of said channels being substantially parallel to the valve's axis when the ball or plug is in the open position, said channels then being arranged parallel to the fluid's axis of streaming.

2. Valve of claim 1, wherein the channels (30, 40, 60, 91) present undulated profiles around a plane which is substantially perpendicular to the axis of rotation (61).

3. Valve of claim 1, wherein a part of the channels (70) is plane and another part of the channels presents undulated profiles.

4. Valve of claim 1, wherein the channels (40, 56, 91) present a cross section with a divergent profile.

5. Valve of claim 1, wherein the channels (130, 140, 150, 160) comprise an expansion area (131, 141, 151, 161) presenting a thickness which is greater than the rest of the channel.

6. Valve of claim 5, wherein the expansion area (131, 141, 161) comprises at least one transversal groove (132, 142) with a substantially rectangular cross section.

7. Valve of claim 6, wherein the expansion area (141, 161) comprises several transversal grooves (142).

8. Valve of claim 5, wherein the expansion area (151) comprises a transversal groove (152) with a substantially triangular cross section.

9. Valve of claim 1, wherein the channels (120) comprise at least one transversal baffle (121).

10. Valve of claim 1, wherein the ball (80) or the plug also has a lateral notch (81) arranged so that a part of it is in direct contact with the inlet pipe and another part of the lateral notch (81) is in contact with the outlet pipe when the valve is in the open position.
